# EUROPEAN PATENT APPLICATION

(11) **EP 4 525 117 A1**
(43) Date of publication of application: **19.03.2025**
(21) Application number: 22940953.7
(22) Date of filing: 13.05.2022
(51) Int. Cl.: H01M 10/0562, H01M 4/134, H01M 4/40, H01M 10/052, H01M 10/0585

(54) **LITHIUM SECONDARY BATTERY**

(71) Applicant: NISSAN MOTOR CO., LTD., Kanagawa 221-0023 (JP); Renault s.a.s, 92100 Boulogne Billancourt (FR)
(72) Inventor: OTANI, Kazufumi, Atsugi-shi, Kanagawa 243-0123 (JP); TAGUCHI, Kaishi, Atsugi-shi, Kanagawa 243-0123 (JP)
(74) Representative: Grünecker Patent- und Rechtsanwälte PartG mbB
(86) International application number: PCT/IB2022/000283
(87) International publication number: WO 2023/218218

(57) **Abstract**

The object of the present invention is to provide a means capable of suppressing decrease in battery capacity and generation of short circuit in a lithium secondary battery of lithium-deposit type. One aspect of the present invention is related to a lithium secondary battery including a power generating element which includes: a positive electrode including a positive electrode current collector and a positive electrode active material layer containing a positive electrode active material capable of occluding and releasing lithium ions and disposed on a surface of the positive electrode current collector; a negative electrode including a negative electrode current collector, in which lithium metal is deposited on the negative electrode current collector when charging; and a solid electrolyte layer containing a solid electrolyte and intervening between the positive electrode and the negative electrode. Further, the lithium secondary battery is characterized that an ion-conductive reaction suppression layer which has lithium-ion conductivity and suppresses the reaction between the lithium metal and the solid electrolyte is arranged at a part of a region of a main layer of the solid electrolyte layer which faces the negative electrode current collector, where the positive electrode active material layer faces the negative electrode current collector, the solid electrolyte extends to the end part of the solid electrolyte layer in the plane direction at the positive electrode side, an ion-permeation suppression layer which suppresses a permeation of lithium ions is arranged at the end part of the solid electrolyte layer in the plane direction at the negative electrode side, and at least a part of the ion-permeation suppression layer is overlapped with the ion-conductive reaction suppression layer in plan view.

## Description

### TECHNICAL FIELD

The present invention relates to a lithium secondary battery.

### BACKGROUND ART

In recent years, in order to cope with global warming, a reduction of carbon dioxide emission is strongly desired. The automotive industry has a growing expectation on the introduction of electric vehicles (EV) and hybrid electric vehicles (HEV) for a reduction of carbon dioxide emission, and has been intensively working on the development of nonaqueous electrolyte secondary batteries such as motor-driving secondary batteries, which become key to the practical application of these electric vehicles.

The motor-driving secondary batteries are required to have very high output characteristics and high energy as compared to consumer lithium-ion secondary batteries for mobile phones, notebook computers, and the like. Therefore, attention is being given to lithium ion secondary batteries having the highest theoretical energy among all practical batteries, and the development of such lithium ion secondary batteries has been pursued rapidly at present.

Here, lithium-ion secondary batteries that are currently widespread use a combustible organic electrolyte solution as an electrolyte. In such a liquid-type lithium-ion secondary battery, safety measures against liquid leakage, short circuit, overcharge, and the like are more strictly required than other batteries.

Therefore, in recent years, research and development on an all-solid-state lithium secondary battery using an oxide-based or sulfide-based solid electrolyte as an electrolyte have been actively conducted. The solid electrolyte is a material mainly made of an ion conductor that enables ion conduction in a solid. Therefore, in an all-solid-state lithium secondary battery, in principle, various problems caused by a combustible organic electrolyte solution do not occur unlike the conventional liquid-type lithium-ion secondary battery. In general, use of a high-potential and large-capacity positive electrode material and a large-capacity negative electrode material can achieve significant improvement in output density and energy density of a battery.

Conventionally, as one type of all-solid-state lithium secondary batteries, a so-called lithium-deposition type in which lithium metal is deposited on a negative electrode current collector in a charging process is known. In the charging process of such a lithium-deposition-type all-solid-state lithium secondary battery, lithium metal is deposited between the solid electrolyte layer and the negative electrode current collector. US 2019/0157723 A discloses a technique in which a fine particle layer composed of fine particles of amorphous carbon, silicon, silver, tin, aluminum, bismuth, or the like is disposed between a negative electrode current collector and a solid electrolyte layer which constitute a power generating element of a lithium secondary battery. According to US 2019/0157723 A, with such a configuration, when lithium metal is deposited between the fine particle layer and the negative electrode current collector during charging, the fine particle layer serves as a protective layer for a lithium metal layer, and growth of dendrite from the lithium metal layer is suppressed, so that a short circuit of the lithium secondary battery, a decrease in capacity due to the short circuit, and the like are prevented.

### SUMMARY OF INVENTION

### Technical Problem

However, according to the study of the present inventors, it has been found that even when the technique described in US 2019/0157723 A is used, there is still a case where a decrease in battery capacity and generation of short circuit due to growth of dendrite cannot be prevented.

Therefore, an object of the present invention is to provide a means capable of suppressing a decrease in battery capacity and generation of short circuit in a lithium-deposition-type lithium secondary battery.

### Solution to Problem

The present inventors have conducted intensive studies to solve the above problems. As a result, the present inventors have found that in a lithium-deposition-type lithium secondary battery including a power generating element, an ion-conductive reaction suppression layer having lithium-ion conductivity and suppressing a reaction between lithium metal and a solid electrolyte is provided on a region that is a surface, where a solid electrolyte layer faces a negative electrode current collector, on the negative electrode current collector side and in which a positive electrode active material layer faces the negative electrode current collector, an ion-permeation suppression layer suppressing permeation of lithium ions is provided at an end part in a plane direction of the solid electrolyte layer on a negative electrode side, the solid electrolyte layer is provided up to an end part in the plane direction on a positive electrode side, and at least a part of the ion-permeation suppression layer is covered with the ion-conductive reaction suppression layer, whereby the above problems can be solved, and have completed the present invention.

That is, one aspect of the present invention relates to a lithium secondary battery including a power generating element, the power generating element including: a positive electrode in which a positive electrode active material layer containing a positive electrode active material capable of occluding and releasing lithium ions is disposed on a surface of a positive electrode current collector; a negative electrode which includes a negative electrode current collector and in which lithium metal is deposited on the negative electrode current collector during charging; and a solid electrolyte layer intervening between the positive electrode and the negative electrode and containing a solid electrolyte. The lithium secondary battery is characterized in that an ion-conductive reaction suppression layer having lithium-ion conductivity and suppressing a reaction between the lithium metal and the solid electrolyte is provided on at least a part of a region, where the positive electrode active material layer faces the negative electrode current collector, of a main surface of the solid electrolyte layer facing the negative electrode current collector, and the solid electrolyte extends to an end part in a plane direction of the solid electrolyte layer on the positive electrode side, an ion-permeation suppression layer suppressing permeation of lithium ions is provided at an end part in the plane direction of the solid electrolyte layer on the negative electrode side, and at least a part of the ion-permeation suppression layer overlaps the ion-conductive reaction suppression layer in plan view.

### BRIEF DESCRIPTION OF DRAWINGS

Fig. 1 is a perspective view illustrating an appearance of a flat laminate type all-solid-state lithium secondary battery as one embodiment of the present invention.
Fig. 2 is a cross-sectional view taken along line 2-2 illustrated in Fig. 1. Fig. 2 shows a cross-sectional view of a laminate type secondary battery during charging.
Fig. 3 is an enlarged cross-sectional view of a single battery layer of a laminate type secondary battery according to one embodiment of the present invention.
Fig. 4 is an enlarged cross-sectional view of a single battery layer of a laminate type secondary battery according to another embodiment of the present invention.
Fig. 5 is an enlarged cross-sectional view of a single battery layer of a laminate type secondary battery according to still another embodiment of the present invention.

### DESCRIPTION OF EMBODIMENTS

One aspect of the present invention is a lithium secondary battery including a power generating element, the power generating element including: a positive electrode in which a positive electrode active material layer containing a positive electrode active material capable of occluding and releasing lithium ions is disposed on a surface of a positive electrode current collector; a negative electrode which includes a negative electrode current collector and in which lithium metal is deposited on the negative electrode current collector during charging; and a solid electrolyte layer intervening between the positive electrode and the negative electrode and containing a solid electrolyte, in which an ion-conductive reaction suppression layer having lithium-ion conductivity and suppressing a reaction between the lithium metal and the solid electrolyte layer is provided on at least a part of a region, where the positive electrode active material layer faces the negative electrode current collector, of a main surface of the solid electrolyte layer facing the negative electrode current collector, and the solid electrolyte layer extends to an end part in a plane direction of the solid electrolyte layer on the positive electrode side, an ion-permeation suppression layer suppressing permeation of lithium ions is provided at an end part in the plane direction of the solid electrolyte layer on the negative electrode side, and at least a part of the ion-permeation suppression layer overlaps the ion-conductive reaction suppression layer in plan view. According to the present aspect, in a lithium-deposition-type lithium secondary battery, a decrease in battery capacity and generation of short circuit can be suppressed.

Hereinafter, the present aspect will be described with reference to the drawings, but the technical scope of the present invention should be determined based on the description of the claims, and is not limited to the following aspects. Dimensional ratios in the drawings are exaggerated for convenience of description, and may be different from actual ratios. Hereinafter, when it is described that the surfaces of the respective portions are "arranged to flush with each other" or the sizes of the respective portions are "the same (equal)", these may be substantially the same and include manufacturing errors (for example, about ±5%) or the like unless otherwise specified.

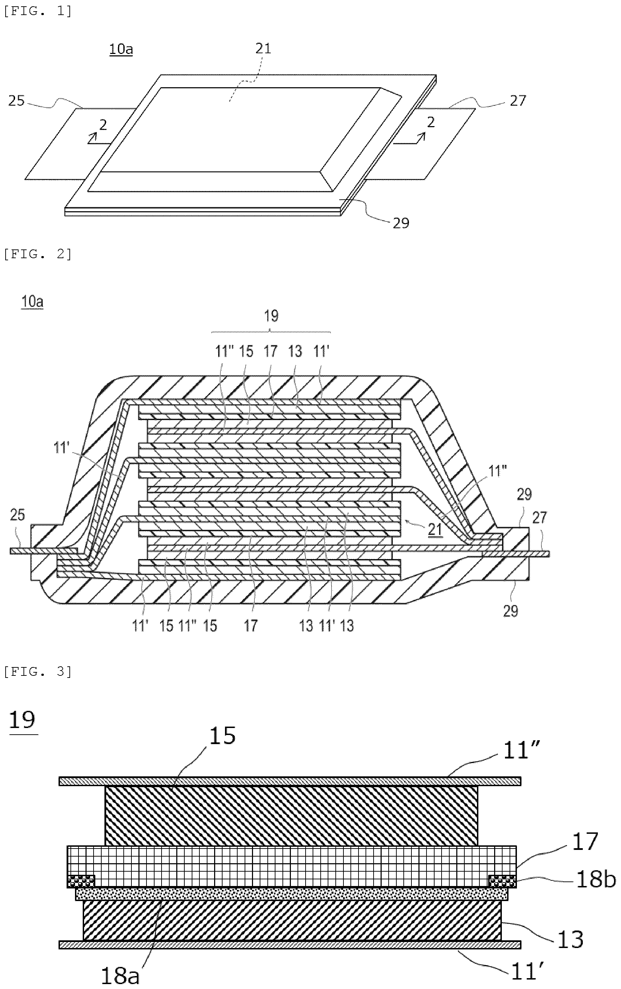

Fig. 1 is a perspective view illustrating an appearance of a flat laminate type all-solid-state lithium secondary battery (hereinafter, also simply referred to as "laminate type secondary battery") as one embodiment of the present invention. Fig. 2 is a cross-sectional view taken along line 2-2 illustrated in Fig. 1. Fig. 2 shows a cross-sectional view of a laminate type secondary battery during charging.

As illustrated in Fig. 1, a laminate type secondary battery 10a has a flat rectangular shape, and a negative electrode current collecting plate 25 and a positive electrode current collecting plate 27 for extracting electric power are extended from both sides of the battery. A power generating element 21 is wrapped in a battery outer casing material (laminate film 29) of the laminate type secondary battery 10a, the periphery of the battery outer casing material is heat-sealed, and the power generating element 21 is hermetically sealed in a state where the negative electrode current collecting plate 25 and the positive electrode current collecting plate 27 are extended to the outside. In the current collecting plates (25 and 27) illustrated in Fig. 1, the negative electrode current collecting plate 25 and the positive electrode current collecting plate 27 may be extended from the same side, or each of the negative electrode current collecting plate 25 and the positive electrode current collecting plate 27 may be divided into a plurality of pieces and extended from each side.

As illustrated in Fig. 2, the power generating element 21 of the laminate type secondary battery 10a of the present aspect has a configuration in which a negative electrode where a negative electrode active material layer 13 containing lithium metal is disposed on both surfaces of a negative electrode current collector 11', a solid electrolyte layer 17, and a positive electrode where a positive electrode active material layer 15 containing a lithium transition metal composite oxide is disposed on both surfaces of a positive electrode current collector 11" are laminated. Specifically, the negative electrode, the solid electrolyte layer, and the positive electrode are laminated in this order such that one negative electrode active material layer 13 and the positive electrode active material layer 15 adjacent thereto face each other with the solid electrolyte layer 17 interposed therebetween. Thereby, the negative electrode, the solid electrolyte layer, and the positive electrode that are adjacent constitute one single battery layer 19. Therefore, it can be said that the laminate type secondary battery 10a illustrated in Fig. 2 has a configuration in which a plurality of single battery layers 19 are laminated to be electrically connected in parallel.

The negative electrode current collector 11' and the positive electrode current collector 11" have a structure in which the negative electrode current collecting plate 25 and the positive electrode current collecting plate 27 which are electrically connected to the respective electrodes (the negative electrode and the positive electrode) are respectively attached to the negative electrode current collector 11' and the positive electrode current collector 11" and are led to an outside of the laminate film 29 so as to be sandwiched between end parts of the laminate film 29. The negative electrode current collecting plate 25 and the positive electrode current collecting plate 27 may be attached to the negative electrode current collector 11' and the positive electrode current collector 11" of the respective electrodes with a positive electrode terminal lead and a negative electrode terminal lead (not illustrated) interposed therebetween, respectively by ultrasonic welding, resistance welding, or the like as necessary.

In the above description, one embodiment of the lithium secondary battery according to one aspect of the present invention has been described by taking the laminate type (internal parallel connection type) all-solid-state lithium secondary battery as an example. However, the type of the lithium secondary battery to which the present invention can be applied is not particularly limited, and the present invention can also be applied to a bipolar lithium secondary battery.

Fig. 3 is an enlarged cross-sectional view of the single battery layer 19 of a laminate type secondary battery according to one embodiment of the present invention. As illustrated in Fig. 3, the single battery layer 19 constituting the laminate type secondary battery 10a according to the present embodiment has a positive electrode including the positive electrode current collector 11" and the positive electrode active material layer 15 disposed on the surface of the positive electrode current collector 11". The solid electrolyte layer 17 containing a solid electrolyte is disposed on the surface of the positive electrode active material layer 15 on a side opposite to the positive electrode current collector 11". In the embodiment illustrated in Fig. 3, a carbon black layer 18a containing carbon black nanoparticles is provided in a region including the entire region, where the positive electrode active material layer 15 faces the negative electrode current collector 11', of the main surface of the solid electrolyte layer 17 facing the negative electrode current collector 11' (in other words, in a slightly larger size than the positive electrode active material layer 15 when the power generating element 21 is viewed in plan view). Carbon black constituting this carbon black layer 18a has lithium-ion conductivity, so that the carbon black layer 18a can conduct lithium ions. Therefore, the progression of the battery reaction is not hindered by disposing the carbon black layer 18a. This carbon black layer 18a also has a function of suppressing a reaction between lithium metal (negative electrode active material layer 13) deposited on the negative electrode current collector 11' during charging and the solid electrolyte contained in the solid electrolyte layer 17. Therefore, it can be said that the carbon black layer 18a functions as an ion-conductive reaction suppression layer.

As illustrated in Fig. 3, in the single battery layer 19 constituting the laminate type secondary battery 10a according to the present embodiment, the solid electrolyte layer 17 extends to the end part in the plane direction of the solid electrolyte layer 17 on the positive electrode side (upper side in Fig. 3). Meanwhile, a resin layer 18b made of a resin sheet is provided over the entire periphery of the end part at the end part in the plane direction of the solid electrolyte layer 17 on the negative electrode side (lower side in Fig. 3). The resin constituting the resin layer 18b is a material which does not have lithium-ion conductivity. Therefore, the resin layer 18b functions as an ion-permeation suppression layer suppressing permeation of lithium ions. The resin layer 18b (ion-permeation suppression layer) is disposed over the entire periphery so as to overlap the carbon black layer 18a (ion-conductive reaction suppression layer) in plan view of the power generating element 21 (single battery layer 19) (when viewed from the lamination direction). As described above, since at least a part of the resin layer 18b (ion-permeation suppression layer) is disposed so as to overlap the carbon black layer 18a (ion-conductive reaction suppression layer), no gap is generated in the plane direction between the ion-conductive reaction suppression layer and the ion-permeation suppression layer, and local deposition of lithium metal (generation of dendrite) can be suppressed. The growth of dendrite at the end part of the ion-conductive reaction suppression layer can be suppressed by providing the ion-permeation suppression layer at the end part. By providing the ion-permeation suppression layer at the end part in the plane direction of the solid electrolyte layer on the negative electrode side and allowing the solid electrolyte layer to exist up to the end part in the plane direction on the positive electrode side, it is possible to prevent the generation of dendrite due to the cracking of the ion-conductive reaction suppression layer occurring in a roll pressing step at the time of preparing the single battery layer.

As described above, in the embodiment illustrated in Fig. 3, the positive electrode active material layer 15 is provided between the solid electrolyte layer 17 and the positive electrode current collector 11". In other words, it can be said that the solid electrolyte layer 17 faces the positive electrode current collector 11" with the positive electrode active material layer 15 interposed therebetween. The negative electrode active material layer 13 and the carbon black layer 18a (ion-conductive reaction suppression layer) are provided between the solid electrolyte layer 17 and the negative electrode current collector 11'. In other words, it can be said that the solid electrolyte layer 17 faces the negative electrode current collector 11' with the negative electrode active material layer 13 and the carbon black layer 18a (ion-conductive reaction suppression layer) interposed therebetween.

In the laminate type secondary battery 10a according to the present aspect, it is preferable that the power generating element 21 sealed in the laminate film 29 and the power generating element 21 sealed in the laminate film 29 illustrated in Fig. 1 are sandwiched between two plate-shaped members and further fastened using a fastening member. Thereby, the plate-shaped member and the fastening member function as a pressurizing member that pressurizes (confines) the power generating element 21 in the lamination direction thereof. Examples of the plate-shaped member include a metal plate, a resin plate, and the like. Examples of the fastening member include a bolt, a nut, and the like. However, the pressurizing member is not particularly limited as long as it is a member that can pressurize the power generating element 21 in the lamination direction. Typically, a combination of a plate formed of a material having rigidity such as a plate-shaped member and the above-described fastening member is used as the pressurizing member. As the fastening member, not only the bolt and the nut but also a tension plate or the like that fixes the end part of the plate-shaped member so as to confine the power generating element 21 in the lamination direction may be used. The lower limit of the load applied to the power generating element 21 (confining pressure in the lamination direction of the power generating element) is, for example, 0.1 MPa or more, preferably 1 MPa or more, more preferably 3 MPa or more, and further preferably 5 MPa or more. The upper limit of the confining pressure in the lamination direction of the power generating element is, for example, 100 MPa or less, preferably 70 MPa or less, more preferably 40 MPa or less, and further preferably 10 MPa or less.

Hereinafter, main components of the laminate type secondary battery 10a described above will be described.

### [Current collector (positive electrode current collector and negative electrode current collector)]

The positive electrode current collector and the negative electrode current collector are conductive members functioning as a flow path of electrons during a battery reaction (charging and discharging), and have, for example, a thin plate (foil) shape. The negative electrode current collector faces the positive electrode current collector with the power generating element (solid electrolyte layer) interposed therebetween. Materials constituting the positive electrode current collector and the negative electrode current collector are not particularly limited. As constituent materials of the positive electrode current collector and the negative electrode current collector, for example, a metal or a resin having conductivity is adopted.

Examples of the metal include aluminum (Al), nickel (Ni), iron (Fe), stainless steel (SUS), titanium (Ti), copper (Cu), and the like. In addition to these, a clad material of nickel and aluminum, a clad material of copper and aluminum, or the like may be used. A foil in which a metal surface is coated with aluminum may be used. Among them, aluminum, stainless steel, copper, and nickel are preferable from the viewpoint of the electron conductivity, the battery operating potential, and the like. Examples of the resin having conductivity include a resin obtained by adding a conductive filler to a non-conductive polymer material.

The thicknesses of the positive electrode current collector and the negative electrode current collector are not particularly limited, but are, for example, 10 to 100 µm.

The positive electrode current collector and the negative electrode current collector may have a single-layer structure made of a single material, or may have a laminated structure in which layers made of these materials are appropriately combined. From the viewpoint of weight reduction, it is preferable that the positive electrode current collector and the negative electrode current collector include at least a conductive resin made of a resin having conductivity. From the viewpoint of blocking the movement of lithium ions between single battery layers, a metal layer may be provided in a part of the positive electrode current collector and the negative electrode current collector. The planar shape of the positive electrode current collector and the negative electrode current collector is, for example, a quadrangle such as a short shape, a circle, an ellipse, or the like. The sizes of the planar shapes of the positive electrode current collector and the negative electrode current collector are, for example, substantially the same.

### [Positive electrode active material layer]

A positive electrode constituting the lithium secondary battery according to the present aspect has a positive electrode active material layer containing a positive electrode active material capable of occluding and releasing lithium ions. The positive electrode active material layer 15 is preferably formed using, for example, an NMC composite oxide such as NMC 811 (lithium nickel cobalt manganese oxide; LiNi_{0.8}Co_{0.1}Mn_{0.1}O₂) as a main raw material. The positive electrode active material layer 15 also preferably includes a positive electrode active material layer containing sulfur. The type of the positive electrode active material containing sulfur is not particularly limited, but examples thereof include particles or a thin film of an organic sulfur compound or an inorganic sulfur compound in addition to the elemental sulfur (S), and any material may be used as long as the material can release lithium ions during charging and occlude lithium ions during discharging by utilizing an oxidation-reduction reaction of sulfur.

The thickness (the size in the lamination direction) of the positive electrode active material layer 15 varies depending on the configuration of the intended lithium secondary battery, but is, for example, preferably within a range of 0.1 to 1000 µm, and more preferably 40 to 100 µm.

As the positive electrode active material, two or more kinds of positive electrode active materials may be used in combination. The content of the positive electrode active material in the positive electrode active material layer is not particularly limited, but for example, is preferably within a range of 30 to 99 mass%, more preferably within a range of 40 to 90 mass%, further preferably within a range of 45 to 80 mass%.

In the lithium secondary battery according to the present aspect, the positive electrode active material layer 15 preferably further contains a solid electrolyte. Examples of the solid electrolyte include a sulfide solid electrolyte, a resin solid electrolyte, and an oxide solid electrolyte. In the present specification, the solid electrolyte refers to a material mainly made of an ion conductor that enables ion conduction in a solid, and particularly refers to a material having a degree of lithium-ion conductivity at a normal temperature (25°C) of 1×10⁻⁵ S/cm or more, and the degree of lithium-ion conductivity thereof is 1×10⁻⁴ S/cm or more. Here, a value of the degree of ionic conductivity can be measured by an AC impedance method.

In another preferred embodiment of the secondary battery according to the present aspect, the solid electrolyte is preferably a sulfide solid electrolyte containing an S element, more preferably a sulfide solid electrolyte containing a Li element, an M element, and an S element, where the M element includes at least one element selected from the group consisting of P, Si, Ge, Sn, Ti, Zr, Nb, Al, Sb, Br, Cl, and I, and further preferably a sulfide solid electrolyte containing an S element, a Li element, and a P element, from the viewpoint of exhibiting excellent lithium-ion conductivity and being capable of further following the volume change of the electrode active material associated with charging and discharging.

The sulfide solid electrolyte may have a Li₃PS₄ skeleton, a Li₄P₂S₇ skeleton, or a Li₄P₂S₆ skeleton. Examples of the sulfide solid electrolyte having a Li₃PS₄ skeleton include LiI-Li₃PS₄, LiI-LiBr-Li₃PS₄, and Li₃PS₄. Examples of the sulfide solid electrolyte having a Li₄P₂S₇ skeleton include a Li-P-S-based solid electrolyte called LPS (for example, Li₇P₃S₁₁). As the sulfide solid electrolyte, for example, LGPS represented by Li₍₄₋ₓ₎Ge₍₁₋ₓ₎PₓS₄ (x satisfies 0 < x < 1) or the like may be used. More specifically, examples of the sulfide solid electrolyte include LPS (Li₂S-P₂S₅) , Li₇P₃S₁₁, Li_{3.2}P_{0.96}S, Li_{3.25}Ge_{0.25}P_{0.75}S₄, Li₁₀GeP₂S₁₂, Li₆PS₅X (where X is Cl, Br, or I), and the like. The description of "Li₂S-P₂S₅" means a sulfide solid electrolyte obtained by using a raw material composition containing Li₂S and P₂S₅, and the same applies to other descriptions. Above all, the sulfide solid electrolyte has high ion conductivity and low volume modulus, and thus is preferably selected from the group consisting of LPS (Li₂S-P₂S₅), Li₆PS₅X (where X is Cl, Br, or I), Li₇P₃S₁₁, Li_{3.2}P_{0.96}S, and Li₃PS₄, from the viewpoint of capable of further following the volume change of the electrode active material associated with charging and discharging.

The content of the solid electrolyte in the positive electrode active material layer is not particularly limited, but for example, is preferably within a range of 1 to 70 mass%, more preferably within a range of 10 to 60 mass%, further preferably within a range of 20 to 55 mass%.

The positive electrode active material layer may further contain at least one of a conductive aid and a binder in addition to the positive electrode active material and the solid electrolyte. The thickness of the positive electrode active material layer varies depending on the configuration of the intended lithium secondary battery, but is, for example, preferably within a range of 0.1 to 1000 µm, and more preferably 40 to 100 µm.

### [Solid electrolyte layer]

The solid electrolyte layer is a layer intervening between the positive electrode active material layer and the negative electrode current collector and contains a solid electrolyte (usually as a main component).

The solid electrolyte layer intervening between the positive electrode active material layer and the ion-conductive reaction suppression layer contains a solid electrolyte as a main component. Examples of the solid electrolyte include a sulfide solid electrolyte and an oxide solid electrolyte, and a sulfide solid electrolyte is preferable. Examples of the sulfide solid electrolyte include LPS-based (for example, argyrodite (Li₆PS₅Cl)) and LGPS-based (for example, Li₁₀GeP₂S₁₂) materials.

The content of the solid electrolyte in the solid electrolyte layer is, for example, preferably within a range of 10 to 100 mass%, more preferably within a range of 50 to 100 mass%, further preferably within a range of 90 to 100 mass%, with respect to the total mass of the solid electrolyte layer.

The thickness of the solid electrolyte layer varies depending on the configuration of the intended lithium secondary battery, but is, for example, preferably within a range of 0.1 to 1000 µm, and more preferably 10 to 40 µm.

### [Negative electrode active material layer]

The lithium secondary battery according to the present aspect is a so-called lithium-deposition-type lithium secondary battery in which lithium metal is deposited on the negative electrode current collector in the charging process. A layer made of lithium metal deposited on the negative electrode current collector in this charging process is the negative electrode active material layer of the lithium secondary battery according to the present aspect. Therefore, the thickness of the negative electrode active material layer increases with the progression of the charging process, and the thickness of the negative electrode active material layer decreases with the progression of the discharging process. The negative electrode active material layer may not be present when the battery has been completely discharged, but in some cases, a negative electrode active material layer made of a certain amount of lithium metal may be disposed when the battery has been completely discharged. The thickness of the negative electrode active material layer (lithium metal layer) when the battery has been completely discharged is not particularly limited, but is usually 0.1 to 1000 µm.

### [Ion-conductive reaction suppression layer]

In the lithium secondary battery according to the present aspect, as illustrated in Fig. 3, an ion-conductive reaction suppression layer (carbon black layer 18a) is provided on at least a part of a region (preferably, a region including the entire region), where the positive electrode active material layer 15 faces the negative electrode current collector 11', of a main surface of the solid electrolyte layer 17 facing the negative electrode current collector 11'. This ion-conductive reaction suppression layer is a layer having lithium-ion conductivity and inhibiting a reaction between lithium metal (negative electrode active material layer) and a solid electrolyte. Therefore, by providing the ion-conductive reaction suppression layer, it is possible to prevent deterioration of the solid electrolyte and a decrease in battery capacity caused by the reaction between the lithium metal (negative electrode active material layer) and the solid electrolyte without hindering the progression of the battery reaction.

Here, the fact that a material "has lithium-ion conductivity" means that the degree of lithium-ion conductivity of the material at 25°C is 1×10⁻⁴ [S/cm] or more. On the other hand, the fact that a material "does not have lithium-ion conductivity" means that the degree of lithium-ion conductivity of the material at 25°C is less than 1×10⁻⁴ [S/cm]. In the lithium secondary battery according to the present aspect, the degree of lithium-ion conductivity of the constituent material of the ion-conductive reaction suppression layer at 25°C is 1×10⁻⁴ [S/cm] or more, preferably 1.5×10⁻⁴ [S/cm] or more, more preferably 2.0×10⁻⁴ [S/cm] or more, further preferably 2.5×10⁻⁴ [S/cm] or more, and particularly preferably 3.0×10⁻⁴ [S/cm] or more.

The constituent material of the ion-conductive reaction suppression layer is not particularly limited, and various materials capable of expressing the above-described function can be employed. Examples of the constituent material of the ion-conductive reaction suppression layer include nanoparticles having lithium-ion conductivity (in the present specification, nanoparticles as a constituent material of the ion-conductive reaction suppression layer are also simply referred to as "first nanoparticles"). When the ion-conductive reaction suppression layer contains the first nanoparticles, a lithium secondary battery having a particularly excellent function of the ion-conductive reaction suppression layer can be provided. Here, the "nanoparticles" mean particles having an average particle size on a scale of nanometers (nm). The "average particle size" of nanoparticles refers to a 50% cumulative diameter (D50) with respect to a particle size (maximum distance among distances between any two points on the contour line of the observed particle) measured by observing a cross-section of a layer containing nanoparticles with a scanning electron microscope (SEM). The average particle size of the first nanoparticles is preferably 500 nm or less, more preferably 300 nm or less, further preferably 150 nm or less, particularly preferably 100 nm or less, and most preferably 60 nm or less. In particular, when the average particle size of the first nanoparticles is 60 nm or less, a lithium secondary battery particularly excellent in the effect of suppressing the growth of dendrites can be provided. The lower limit value of the average particle size of the first nanoparticles is not particularly limited, but is usually 10 nm or more and preferably 20 nm or more.

Such first nanoparticles preferably contain, for example, one or two or more elements selected from the group consisting of carbon, gold, platinum, palladium, silicon, silver, aluminum, bismuth, tin, and zinc, and more preferably contain one or two or more of elementary substances or alloys of these elements, from the viewpoint of being particularly excellent in the function as the ion-conductive reaction suppression layer. The first nanoparticles preferably contain carbon, and more preferably consist of an elementary substance of carbon. Examples of the material composed of such an elementary substance of carbon include acetylene black, Vulcan (registered trademark), Black Pearl (registered trademark), carbon nanofiber, Ketjen Black (registered trademark), carbon nanotube, carbon nanohorn, carbon nanoballoon, fullerene, and the like. When the ion-conductive reaction suppression layer contains such nanoparticles, the layer may further contain a binder.

The method for forming the ion-conductive reaction suppression layer containing the first nanoparticles as described above on the surface of the solid electrolyte layer on the negative electrode current collector side is not particularly limited, but for example, a method can be adopted in which a slurry in which the nanoparticles and a binder as necessary are dispersed in an appropriate solvent is applied to the surface of the solid electrolyte layer on the negative electrode current collector side, and the solvent is dried. Alternatively, the ion-conductive reaction suppression layer may be formed by bonding a coating film obtained by applying the slurry on the surface of a support such as a stainless steel foil and drying the solvent to the surface of the solid electrolyte layer on the negative electrode current collector side using a method such as isostatic pressing and then peeling off the support. In some cases, a continuous layer containing any of the above-described materials may be formed by a method such as sputtering instead of the form of nanoparticles to form the ion-conductive reaction suppression layer.

Although the first nanoparticles for the constituent material of the ion-conductive reaction suppression layer have been described above, the ion-conductive reaction suppression layer containing the first nanoparticles described above usually has electron conductivity. When the ion-conductive reaction suppression layer has electron conductivity as described above, resistance to fast charge can be further improved, which is preferable.

However, it is also one of preferred embodiments that the ion-conductive reaction suppression layer is electronically insulated. Examples of the electron insulating constituent material of the ion-conductive reaction suppression layer include one or two or more lithium-containing compounds selected from the group consisting of lithium halide (lithium fluoride (LiF), lithium chloride (LiCl), lithium bromide (LiBr), or lithium iodide (LiI)), a composite metal oxide represented by Li-M-O (M is one or two or more metal elements selected from the group consisting of Mg, Au, Al, Sn, and Zn), and a Li-Ba-TiO₃ composite oxide. All of these materials are more stable in reductive decomposition due to contact with lithium metal than the solid electrolyte. That is, when the tendency of the solid electrolyte constituting the solid electrolyte layer to undergo reductive decomposition due to contact with lithium metal is compared with the tendency of the lithium-containing compound as the constituent material of the ion-conductive reaction suppression layer to undergo reductive decomposition due to contact with lithium metal, the latter tendency is smaller. Therefore, the lithium-containing compound can also function as an ion-conductive reaction suppression layer. The method for forming the ion-conductive reaction suppression layer containing a lithium-containing compound as described above is also not particularly limited, but for example, a continuous layer containing the above-described lithium-containing compound can be formed by a method such as sputtering to form the ion-conductive reaction suppression layer.

The average thickness of the ion-conductive reaction suppression layer is not particularly limited, and the layer may be disposed at such a thickness that the above-described function can be exhibited. For example, the average thickness of the ion-conductive reaction suppression layer is preferably 300 nm to 20 µm, more preferably 500 nm to 15 µm, and further preferably 1 to 10 µm when this layer is a layer containing first nanoparticles. When this layer is a continuous layer made of a lithium-containing compound or the like formed by a method such as sputtering, the average thickness is preferably 0.5 to 20 nm. The "average thickness" of the ion-conductive reaction suppression layer means a value calculated as an arithmetic average value of thicknesses measured at several to several tens of different points in the ion-conductive reaction suppression layer constituting the lithium secondary battery.

The Young's modulus of the ion-conductive reaction suppression layer is preferably 2 GPa or more, more preferably 5 GPa or more, particularly preferably 8 GPa or more, and particularly preferably 10 GPa or more. When the ion-conductive reaction suppression layer shows such a high Young's modulus, even if dendrite is generated from lithium metal deposited during fast charge, it is possible to effectively prevent generation of internal short-circuit due to the dendrite penetrating the solid electrolyte layer and reaching the positive electrode active material layer. In the present specification, as the value of the Young's modulus, a value measured in accordance with JIS K 7161-1:2014 is adopted.

### [Ion-permeation suppression layer]

As illustrated in Fig. 3, the lithium secondary battery according to the present aspect is also characterized in that an ion-permeation suppression layer (resin layer 18b) is provided on at least a part (preferably, the entire periphery) of the end part in the plane direction of the solid electrolyte layer 17 on the negative electrode side. The ion-permeation suppression layer is a layer suppressing permeation of lithium ions. Therefore, by providing the ion-permeation suppression layer, even when dendrites are generated from the lithium metal of the negative electrode active material layer 13, it is possible to effectively prevent generation of short circuit due to growth of the dendrites bypassing the outer periphery of the solid electrolyte layer 17.

The constituent material of the ion-permeation suppression layer is not particularly limited, and various materials capable of expressing the above-described function can be employed. The constituent material of the ion-permeation suppression layer is preferably a material which does not have lithium-ion conductivity. In the lithium secondary battery according to the present aspect, the degree of lithium-ion conductivity of the constituent material of the ion-permeation suppression layer at 25°C is less than 1×10⁻⁴ [S/cm], preferably 1×10⁻⁵ [S/cm] or less, more preferably 1×10⁻⁶ [S/cm] or less, further preferably 1×10⁻⁷ [S/cm] or less, and particularly preferably 1×10⁻⁸ [S/cm] or less. When the degree of lithium-ion conductivity of the constituent material of the ion-permeation suppression layer is a value within these ranges, the effect of suppressing the permeation of lithium ions is particularly high. As a relative relationship of the degree of lithium-ion conductivity between the constituent material of the ion-conductive reaction suppression layer and the constituent material of the ion-permeation suppression layer, the degree of lithium-ion conductivity (25°C) of the constituent material of the ion-conductive reaction suppression layer is preferably 10 times or more, more preferably 100 times or more, further preferably 300 times or more, and particularly preferably 500 times or more of the degree of lithium-ion conductivity (25°C) of the ion-permeation suppression layer. When the degree of lithium-ion conductivity of each material is different to this extent, it can be said that the degree of lithium-ion conductivity is preferable as a constituent material of each layer.

Examples of the constituent material of the ion-permeation suppression layer include a resin material or a rubber material, and an inorganic powder such as S-B-Na-based glass frit. Among them, since the resin material and the rubber material (particularly, the resin material) have elasticity, for example, even when internal stress is generated in a region where the ion-permeation suppression layer is formed, the ion-permeation suppression layer is extended without being broken, so that generation of short circuit can be effectively prevented. Examples of such a resin material or rubber material include thermoplastic polymers such as polybutylene terephthalate, polyethylene terephthalate, polyvinylidene fluoride (PVDF) (including a compound in which a hydrogen atom is substituted with another halogen element), polyethylene, polypropylene, polymethylpentene, polybutene, polyether nitrile, polytetrafluoroethylene, polyacrylonitrile, polyimide, polyamide, an ethylene-vinyl acetate copolymer, polyvinyl chloride, styrene-butadiene rubber (SBR), an ethylene-propylene-diene copolymer, styrene-butadienestyrene block copolymer and a hydrogenated product thereof, and a styreneisoprene-styrene block copolymer and a hydrogenated product thereof, fluorine resins such as a tetrafluoroethylene-hexafluoropropylene copolymer (FEP), a tetrafluoroethylene-perfluoroalkylvinylether copolymer (PFA), an ethylene-tetrafluoroethylene copolymer (ETFE), polychlorotrifluoroethylene (PCTFE), an ethylene-chlorotrifluoroethylene copolymer (ECTFE), and polyvinyl fluoride (PVF), vinylidene fluoride-based fluorine rubber such as vinylidene fluoride-hexafluoropropylene-based fluorine rubber (VDF-HFP-based fluorine rubber), vinylidene fluoride-hexafluoropropylene-tetrafluoroethylene-based fluorine rubber (VDF-HFP-TFE-based fluorine rubber), vinylidene fluoride-pentafluoropropylene-based fluorine rubber (VDF-PFP-based fluorine rubber), vinylidene fluoride-pentafluoropropylene-tetrafluoroethylene-based fluorine rubber (VDF-PFP-TFE-based fluorine rubber), vinylidene fluoride-perfluoromethylvinylether-tetrafluoroethylene-based fluorine rubber (VDF-PFMVE-TFE-based fluorine rubber), and vinylidene fluoride-chlorotrifluoroethylene-based fluorine rubber (VDF-CTFE-based fluorine rubber), epoxy resins, and the like.

Nanoparticles which do not have lithium-ion conductivity (in the present specification, nanoparticles as a constituent material of the ion-permeation suppression layer are also simply referred to as "second nanoparticles") may be used as a constituent material of the ion-permeation suppression layer. The average particle size of the second nanoparticles is preferably 500 nm or less, more preferably 300 nm or less, further preferably 150 nm or less, even more preferably 100 nm or less, particularly preferably 70 nm or less, and most preferably 40 nm or less. In particular, when the average particle size of the second nanoparticles is 40 nm or less, a lithium secondary battery particularly excellent in the effect of suppressing the growth of dendrites can be provided. The lower limit value of the average particle size of the second nanoparticles is not particularly limited, but is usually 10 nm or more and preferably 20 nm or more.

From the viewpoint that lithium-ion conductivity is small and the growth of dendrites can be effectively suppressed, the second nanoparticles preferably contain an oxide or nitride of a metal. Examples of such an oxide or nitride of a metal include oxides or nitrides of metals such as aluminum, silicon, magnesium, calcium, potassium, tin, sodium, boron, titanium, lead, zirconium, and yttrium. Among them, the second nanoparticles preferably contain oxides of these metals, more preferably contain an oxide of aluminum (aluminum oxide; alumina) or an oxide of silicon (silicon oxide; silica), and further preferably contain alumina. When the ion-permeation suppression layer contains such nanoparticles, the layer may further contain a binder.

The Young's modulus of the ion-permeation suppression layer is preferably substantially the same (within ±10%) as the Young's modulus of the solid electrolyte layer. With such a configuration, cracking of the ion-conductive reaction suppression layer in a step such as roll pressing at the time of manufacturing a cell can be suppressed.

The method for forming the ion-permeation suppression layer as described above at the end part in the plane direction of the solid electrolyte layer on the negative electrode side is not particularly limited, but for example, a method is mentioned in which a slurry in which the nanoparticles and a binder as necessary are dispersed in an appropriate solvent is applied to the surface of the end part of the solid electrolyte layer, the solvent is dried, and then a rolling treatment using a roll press machine is performed to embed the ion-permeation suppression layer in the surface of the end part of the solid electrolyte layer. Alternatively, the ion-permeation suppression layer may be formed by bonding a coating film obtained by applying the slurry on the surface of a support such as a stainless steel foil and drying the solvent to the surface of the end part of the solid electrolyte layer using a method such as isostatic pressing and then performing a rolling treatment in a state where the support was peeled off/not peeled off. The ion-permeation suppression layer may be formed by disposing an insulating film such as various resin films instead of applying or transferring the slurry, and then performing a rolling treatment in the same manner. A counterbore may be formed in advance on the surface of the end part of the solid electrolyte layer, and the ion-permeation suppression layer may be disposed or applied thereon.

In a preferred embodiment of the present invention, the solid electrolyte layer is composed of a sheet integrated with the ion-permeation suppression layer. At this time, it is more preferable that the solid electrolyte layer includes a fibrous support to constitute the solid electrolyte layer as a self-supporting sheet integrated with the ion-permeation suppression layer. With such a configuration, the solid electrolyte layer integrated with the ion-permeation suppression layer can be applied to a roll process and provided for manufacturing a laminate with other layers, so that the manufacturing process can be simplified, and productivity can be improved.

In the embodiment illustrated in Fig. 3, the outer peripheral end of the ion-conductive reaction suppression layer is located on the inner side of the outer peripheral end of the ion-permeation suppression layer in plan view. With such a configuration, the deposition of Li at the outer peripheral end of the ion-permeation suppression layer can be suppressed, and capacity deterioration caused by the deposition of Li (dendrite) can be suppressed. However, in some cases, the outer peripheral end of the ion-conductive reaction suppression layer may coincide with the outer peripheral end of the ion-permeation suppression layer in plan view.

In the embodiment illustrated in Fig. 3, the outer peripheral end of the solid electrolyte layer coincides with the outer peripheral end of the ion-permeation suppression layer in plan view. With such a configuration, the deposition of Li from the outer peripheral end side of the ion-permeation suppression layer can be suppressed, and capacity deterioration caused by Li dendrite at the end part of the solid electrolyte layer can be suppressed. However, in some cases, the outer peripheral end of the solid electrolyte layer may be located on the inner side (or the outer side) of the outer peripheral end of the ion-permeation suppression layer in plan view.

In the embodiment illustrated in Fig. 3, the inner peripheral end of the ion-permeation suppression layer is located on the outer side of the outer peripheral end of the positive electrode active material layer in plan view. With such a configuration, an increase in internal resistance of the end part of the positive electrode active material layer can be suppressed. That is, since the inner peripheral end of the ion-permeation suppression layer is located on the outer side of the outer peripheral end of the positive electrode active material layer, the positive electrode active material layer can be more effectively utilized. However, in some cases, the inner peripheral end of the ion-permeation suppression layer may coincide with the outer peripheral end of the positive electrode active material layer in plan view or may be located on the inner side thereof.

In the embodiment illustrated in Fig. 3, the main surface of the solid electrolyte layer facing the negative electrode current collector and the surface of the ion-permeation suppression layer on the negative electrode side are arranged to flush with each other. With such a configuration, it is possible to suppress generation of cracks due to generation of a shear stress at an interface between the ion-permeation suppression layer and the solid electrolyte layer during a step such as roll pressing at the time of preparing a cell. As a result, growth of Li dendrite due to the generation of cracks can be suppressed. However, in some cases, the main surface of the solid electrolyte layer facing the negative electrode current collector and the surface of the ion-permeation suppression layer on the negative electrode side may not be arranged to flush with each other. For example, the surface of the ion-permeation suppression layer on the negative electrode side may protrude more toward the negative electrode side than the main surface of the solid electrolyte layer.

The thickness of the ion-permeation suppression layer is preferably half or less of the thickness of the solid electrolyte layer. Here, in the cell manufacturing process, as the ion-permeation suppression layer is thicker, cracks are more likely to occur due to a difference in elastic modulus from the solid electrolyte layer during a step such as roll pressing. Therefore, the thickness of the ion-permeation suppression layer is more preferably 25% or less, more preferably 20% or less, further preferably 15% or less, and particularly preferably 10% or less of the thickness of the solid electrolyte layer.

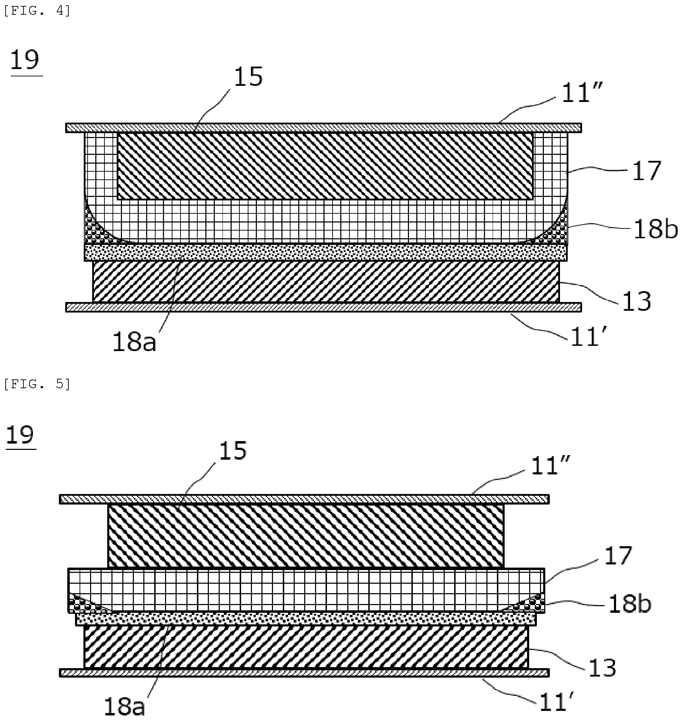

Figs. 4 and 5 are enlarged cross-sectional views of a single battery layer of a laminate type secondary battery according to another embodiment of the present invention. In the embodiments illustrated in Figs. 4 and 5, the thickness of the ion-permeation suppression layer (resin layer 18b) is larger at the outer peripheral end at the end part in the plane direction on the negative electrode side than at the inner peripheral end at the end part in the plane direction of the negative electrode side. With such a configuration, Li dendrite at the end part can be further suppressed, and further improvement in cycle characteristics can be expected.

The lithium secondary battery according to the present aspect is preferably an all-solid-state lithium secondary battery. The all-solid-state lithium secondary battery operates, for example, in a state where a predetermined confining pressure is applied in the lamination direction of the power generating element. When the all-solid-state battery is charged, a negative electrode active material layer made of lithium metal is formed between the negative electrode current collector and the ion-conductive reaction suppression layer. In this negative electrode active material layer, lithium (Li) ions in the positive electrode active material layer pass through the solid electrolyte layer and are deposited as lithium metal on the surface of the negative electrode current collector. On the other hand, when the all-solid-state lithium secondary battery is discharged, lithium ions pass from the negative electrode active material layer through the solid electrolyte layer and are occluded in the positive electrode active material. Therefore, the negative electrode active material layer usually disappears at SOC 0% (SOC 100% is in a fully charged state).

The lithium secondary battery according to the present aspect may not be an all-solid type. That is, the solid electrolyte layer may further contain a conventionally known liquid electrolyte (electrolyte solution). The amount of the liquid electrolyte (electrolyte solution) that can be contained in the solid electrolyte layer is not particularly limited but is preferably such an amount that the shape of the solid electrolyte layer formed by the solid electrolyte is maintained and liquid leakage of the liquid electrolyte (electrolyte solution) does not occur. As the liquid electrolyte (electrolyte solution), a solution containing a conventionally known lithium salt dissolved in a conventionally known organic solvent is used. The liquid electrolyte (electrolyte solution) may further contain an additive other than the organic solvent and the lithium salt. These additives may be used singly or in combination of two or more kinds thereof. The amount of the additive used in the electrolyte solution can be appropriately adjusted.

### Examples

Hereinafter, the present invention will be described in more detail with reference to Examples. However, the technical scope of the present invention is not limited only to the following Examples. Hereinafter, the operation was performed in a glove box. The instruments, devices, and the like used in the glove box were sufficiently dried in advance.

### [Preparation example of all-solid-state lithium secondary battery]

First, LiNi_{0.8}Mn_{0.1}Co_{0.1}O₂ as a positive electrode active material, acetylene black as a conductive aid, and a sulfide solid electrolyte (LPS (Li₂S-P₂S₅)) were weighed to have a mass ratio of 70 : 5 : 25, these materials were mixed in a glove box using an agate mortar, and then the resultant mixture was further mixed and stirred in a planetary ball mill. To 100 parts by mass of the obtained mixed powder, 2 parts by mass of styrene-butadiene rubber (SBR) was added, and mesitylene was added thereto as a solvent to prepare a positive electrode active material slurry. Next, the positive electrode active material slurry prepared above was applied to a surface of a stainless steel (SUS) foil as a positive electrode current collector and dried to form a positive electrode active material layer, thereby preparing a positive electrode.

A solid electrolyte slurry was prepared by adding 2 parts by mass of the same styrene-butadiene rubber (SBR) as described above to 100 parts by mass of a sulfide solid electrolyte (LPS (Li₂S-P₂S₅)) and adding mesitylene as a solvent. Subsequently, the solid electrolyte slurry prepared above was applied to a surface of a stainless steel foil as a support and dried to prepare a solid electrolyte layer on the surface of the stainless steel foil. Next, an insulating film (PET film) as an ion-permeation suppression layer was disposed on the prepared solid electrolyte layer, and the thickness was made uniform by roll pressing to prepare a solid electrolyte layer in which the ion-permeation suppression layer made of a PET film was disposed on the entire periphery of the end part of the solid electrolyte layer on the negative electrode side.

Subsequently, the positive electrode prepared above and the solid electrolyte layer were superposed on each other such that the surfaces of the positive electrode and the solid electrolyte layer on a side where the ion-permeation suppression layer was not disposed faced to each other, and then bonded to each other by isostatic pressing (700 MPa, 25°C, for 1 minute), and the stainless steel foil on the solid electrolyte layer side was peeled off to obtain a laminate of the positive electrode current collector/the positive electrode active material layer/the solid electrolyte layer (including the ion-permeation suppression layer).

Meanwhile, carbon black nanoparticles were prepared as a constituent material of the ion-conductive reaction suppression layer. A carbon black nanoparticle slurry was prepared by adding 10 parts by mass of the same styrene-butadiene rubber (SBR) as described above to 100 parts by mass of the carbon black nanoparticles and adding mesitylene as a solvent. Subsequently, the carbon black nanoparticle slurry prepared above was applied to a surface of a stainless steel foil as a support and dried to prepare a carbon black layer as an ion-conductive reaction suppression layer on the surface of the stainless steel foil. The outer peripheral size of the carbon black layer (ion-conductive reaction suppression layer) was slightly larger than the region where the positive electrode active material layer faces the negative electrode current collector and slightly smaller than the outer peripheral size of the solid electrolyte layer as illustrated in Fig. 3.

Thereafter, the solid electrolyte layer of the laminate of the positive electrode current collector/the positive electrode active material layer/the solid electrolyte layer (including the ion-permeation suppression layer) prepared above and the carbon black layer (ion-conductive reaction suppression layer) prepared above were superposed on each other so as to face each other, and then bonded to each other by isostatic pressing (700 MPa, 25°C, for 1 minute), and the stainless steel foil on the carbon black layer side was peeled off to form a carbon black layer at the central part of the solid electrolyte layer. Finally, a lithium-deposition-type all-solid-state lithium secondary battery illustrated in Fig. 3 was prepared except that a stainless steel foil as a negative electrode current collector was disposed so as to cover the carbon black layer prepared above and the negative electrode active material layer was not present.

## Claims

1. A lithium secondary battery comprising a power generating element, the power generating element including:
a positive electrode in which a positive electrode active material layer containing a positive electrode active material capable of occluding and releasing lithium ions is disposed on a surface of a positive electrode current collector;
a negative electrode which includes a negative electrode current collector and in which lithium metal is deposited on the negative electrode current collector during charging; and
a solid electrolyte layer intervening between the positive electrode and the negative electrode and containing a solid electrolyte,
wherein an ion-conductive reaction suppression layer having lithium-ion conductivity and suppressing a reaction between the lithium metal and the solid electrolyte is provided on at least a part of a region, where the positive electrode active material layer faces the negative electrode current collector, of a main surface of the solid electrolyte layer facing the negative electrode current collector, and
the solid electrolyte layer extends to an end part in a plane direction of the solid electrolyte layer on the positive electrode side, an ion-permeation suppression layer suppressing permeation of lithium ions is provided at an end part in the plane direction of the solid electrolyte layer on the negative electrode side, and at least a part of the ion-permeation suppression layer overlaps the ion-conductive reaction suppression layer in plan view.

2. The lithium secondary battery according to claim 1, wherein at least a part of an outer peripheral end of the ion-conductive reaction suppression layer is located on an inner side of an outer peripheral end of the ion-permeation suppression layer in plan view.

3. The lithium secondary battery according to claim 1 or 2, wherein at least a part of an outer peripheral end of the solid electrolyte layer coincides with an outer peripheral end of the ion-permeation suppression layer in plan view.

4. The lithium secondary battery according to claim 1 or 2, wherein at least a part of an inner peripheral end of the ion-permeation suppression layer is located on an outer side of an outer peripheral end of the positive electrode active material layer in plan view.

5. The lithium secondary battery according to claim 1 or 2, wherein a main surface of the solid electrolyte layer facing the negative electrode current collector and a surface of the ion-permeation suppression layer on the negative electrode side are arranged to flush with each other.

6. The lithium secondary battery according to claim 1 or 2, wherein a thickness of the ion-permeation suppression layer is half or less of a thickness of the solid electrolyte layer.

7. The lithium secondary battery according to claim 1 or 2, wherein a thickness of the ion-permeation suppression layer is larger at an outer peripheral end at the end part in the plane direction on the negative electrode side than at an inner peripheral end at the end part in the plane direction of the negative electrode side.

8. The lithium secondary battery according to claim 1 or 2, wherein the ion-permeation suppression layer is made of a resin material.

9. The lithium secondary battery according to claim 1 or 2, wherein a Young's modulus of the solid electrolyte layer and a Young's modulus of the ion-permeation suppression layer are substantially the same.

10. The lithium secondary battery according to claim 1 or 2, wherein the solid electrolyte layer includes a fibrous support and is constituted of a self-supporting sheet integrated with the ion-permeation suppression layer.
